# FASCICULE DE BREVET EUROPEEN

(11) **EP 0 597 739 B1**
(45) Date de publication et mention de la délivrance du brevet: **24.04.1996**
(21) Numéro de dépôt: 93402493.6
(22) Date de dépôt: 08.10.1993
(51) Int. Cl.: F16B 2/06, H04N 5/65, G02B 7/02, G02B 7/00, E06B 3/54

(54) **Dispositif pour la fixation sans jeu de plaques de verre**
Anordnung zum spielfreien Befestigen von Glasscheiben
Device for the fastening without play of glass sheets

(30) Priorité: 12.11.1992 FR 9213799
(43) Date de publication de la demande: 18.05.1994
(73) Titulaire: SEXTANT AVIONIQUE S.A., F-92366 Meudon la Forêt Cédex (FR)
(72) Inventeur: Vouillon, Patrick, F-91140 Villebon Sur Yvette (FR); Bedoya, Claude, F-78180 Montigny Le Bretonneux (FR); Gaultier, Philippe, F-78150 Le Chesnay (FR)
(74) Mandataire: de Saint-Palais, Arnaud Marie

(56) Documents cités:
- CH-A- 346 912
- DE-A- 2 060 919
- FR-A- 1 154 239
- US-A- 4 169 617

## Description

La présente invention concerne un dispositif pour la fixation sans jeu d'une plaque de verre sur un support rigide.

Elle s'applique notamment, mais non exclusivement, à la fixation d'une plaque de verre protectrice sur les écrans plats à tube cathodique ou à cristaux liquides.

Pour parvenir à ce résultat, il est connu d'utiliser des brides de fixation en forme d'équerre dont l'une des deux ailes vient s'appliquer sur la face supérieure de la plaque de verre, tandis que l'autre est percée d'un trou dans lequel est introduite une vis qui permet de fixer la bride au support de la plaque.

Une telle bride est par exemple décrite dans le document US-A-4 169 617.

L'emploi de telles brides, toujours de mêmes dimensions, impose que les plaques de verre soient d'épaisseur parfaitement calibrée, obtenues par un usinage précis et donc coûteux.
Si l'on veut éviter de se limiter à l'utilisation de plaques de verre d'épaisseur constante pour obtenir une fixation sans jeu, il est nécessaire de compenser ces variations d'épaisseur en utilisant soit des brides de formes adaptées, soit des cales d'épaisseurs variables, ce qui se prête mal à la fixation de plaques de verre dans un processus industriel présentant des cadences de fabrication élevées.

En outre, lors du serrage de la vis de fixation, la bride exerce une pression dirigée perpendiculairement à la face supérieure de la plaque de verre. Si cette pression dépasse un certain seuil, le verre se brise. Ce dispositif requiert donc l'utilisation de tournevis dynamométrique qui indique la force de serrage.

Par ailleurs, en raison de la précontrainte exercée par les brides, la plaque de verre se trouve fragilisée et risque donc de se briser sous l'effet d'actions externes telles que, par exemple, des phénomènes de dilatation différentielles.
A ce propos, on rappelle que le verre présente un coefficient de dilatation relativement élevé.

L'invention a particulièrement pour but de supprimer ces inconvénients grâce à une solution permettant de s'affranchir des irrégularités au niveau de l'épaisseur du verre et de supprimer toute précontrainte du verre. Elle propose à cet effet un dispositif de fixation sans jeu d'une plaque de verre sur un support rigide au moyen d'au moins une cale présentant un passage traversant suivant un axe, de section oblongue dans un plan perpendiculaire audit axe, et dans lequel peut passer librement une vis de fixation destinée à être vissée dans un perçage taraudé du support.

Ce dispositif est caractérisé en ce que la cale possède une face oblique par rapport audit axe apte à venir glisser et s'autoajuster contre une bordure de la plaque de verre lors du vissage de la vis.

Ce dispositif permet ainsi d'obtenir un ajustement précis et sans contrainte de la cale contre la bordure de la plaque de verre, ce qui élimine tout risque de bris du verre.
Le maintien de la plaque de verre sur le support est obtenu par le simple contact entre deux faces inclinées, l'une située sur la cale, et l'autre sur la bordure de la plaque de verre.
La cale n'a donc aucune prise sur la plaque de verre. Par conséquent, la cale ne peut, en aucune manière, exercer une force contre la face supérieure de la plaque de verre, et cela, quelque soit le serrage de la vis.

Pour ces raisons, le maintien de la plaque de verre peut être assuré par des cales dont la hauteur est indépendante de l'épaisseur de la plaque de verre.
Cette disposition permet donc de s'affranchir de variations éventuelles de l'épaisseur de la plaque de verre.

Selon une particularité de l'invention, les bordures de la plaque de verre susceptibles d'être en contact avec une cale sont soit arrondies, soit chanfreinées.

Une telle plaque de verre, peut être obtenue simplement, par exemple, par meulage des arêtes adjacentes à une même face. L'usinage d'une telle plaque de verre ne présente donc pas de difficultés particulières et, par conséquent, son coût est relativement réduit.

Avantageusement, pour permettre la dilatation du verre tout en maintenant la plaque de verre sans jeu, un joint élastique recouvre la face inclinée des cales.

Selon une autre particularité de l'invention, la cale comprend des moyens pour la maintenir automatiquement contre la bordure de la plaque de verre au cours du serrage de la vis.
Ces moyens peuvent consister, par exemple, en une matière possédant un fort coefficient de frottement recouvrant la zone de la face supérieure de la cale qui entre en contact avec la tête de la vis de serrage, d'un seul côté de la cavité.
Lors du mouvement de rotation imprimé à la vis en vue de son serrage, la tête de la vis frotte sur cette matière, d'un seul côté de la cavité, et, de ce fait, transmet à la cale une force dirigée vers la plaque de verre.
De cette manière, la cale est automatiquement maintenue contre la portion inclinée de la plaque de verre durant le serrage de la vis.

Cette matière possède également une forte possibilité de compression, comme par exemple, la mousse en matière plastique, pour pouvoir s'écraser complètement sous l'effet du serrage de la vis contre la cale. De cette manière, la vis une fois serrée exerce une force sur la face supérieure de la cale, des deux côtés de la cavité simultanément. On évite ainsi tout risque de déformation de la cale au cours de son serrage contre le support.

Grâce à cette disposition, le montage de la cale s'effectue très simplement, la cale étant automatiquement plaquée contre la plaque de verre pendant le serrage de la vis.

En plus des avantages évoqués précédemment, d'importants avantages économiques résultent du dispositif selon l'invention, notamment en ce qui concerne l'usinage des plaques de verre, et également, la possibilité d'intégration de leur montage dans un processus industriel à cadences de fabrication élevées.

Comme les cales du dispositif selon l'invention ne viennent pas s'appliquer sur la face supérieure de la plaque de verre, il en résulte également un encombrement minimum, la hauteur des brides pouvant être inférieure à l'épaisseur du verre.
Cet aspect est prépondérant dans les nouvelles applications d'interface homme-machine intégrant des écrans plats. Il est en effet primordial que ces derniers soient placés le plus près possible de la vitre de protection et présentent un faible encombrement.

Un mode de réalisation du terminal selon l'invention sera décrit ci-après, à titre d'exemple non limitatif, avec référence aux dessins annexés dans lesquels :
la figure 1 représente schématiquement, en coupe transversale, une plaque de verre fixée à un support à l'aide du dispositif selon l'invention ;
la figure 2 est une vue de dessus d'une bride fixée sur le support de la plaque de verre ;
les figures 3 et 4 montrent en coupe suivant AA différents stades de montage de la bride ;
la figure 5 montre une coupe suivant BB de la bride au niveau de la vis de fixation.

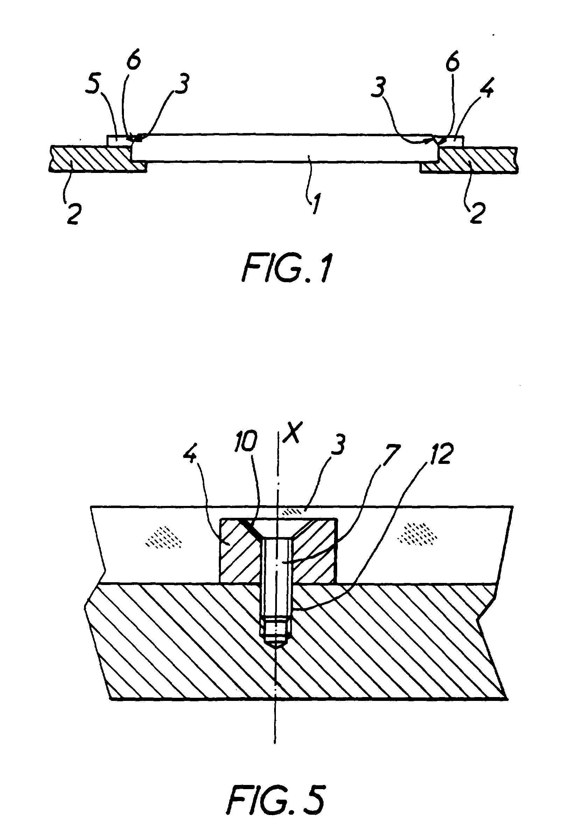

La figure 1 montre un support 2 formant un cadre présentant une feuillure dans laquelle vient s'engager partiellement une plaque de verre 1, une partie de la tranche de cette plaque de verre 1 émergeant du support 2. Cette partie de la tranche présente une face chanfreinée 3 contre laquelle viennent s'appliquer des brides de fixation 4,5.

Ces brides 4,5 présentent une forme trapézoïdale dont la section longitudinale suivant un axe X perpendiculaire au plan de la plaque de verre 1, est un trapèze rectangle. Elles possèdent, dans leur partie antérieure, une face inclinée 6, dont l'inclinaison correspond sensiblement à celle du chanfrein 3 ménagé dans la tranche de la plaque de verre 1, et contre lequel elle vient en appui.

Bien entendu, de telles brides pourraient également fixer une plaque de verre dont les bords sur lesquels elles s'appliquent seraient simplement arrondis.

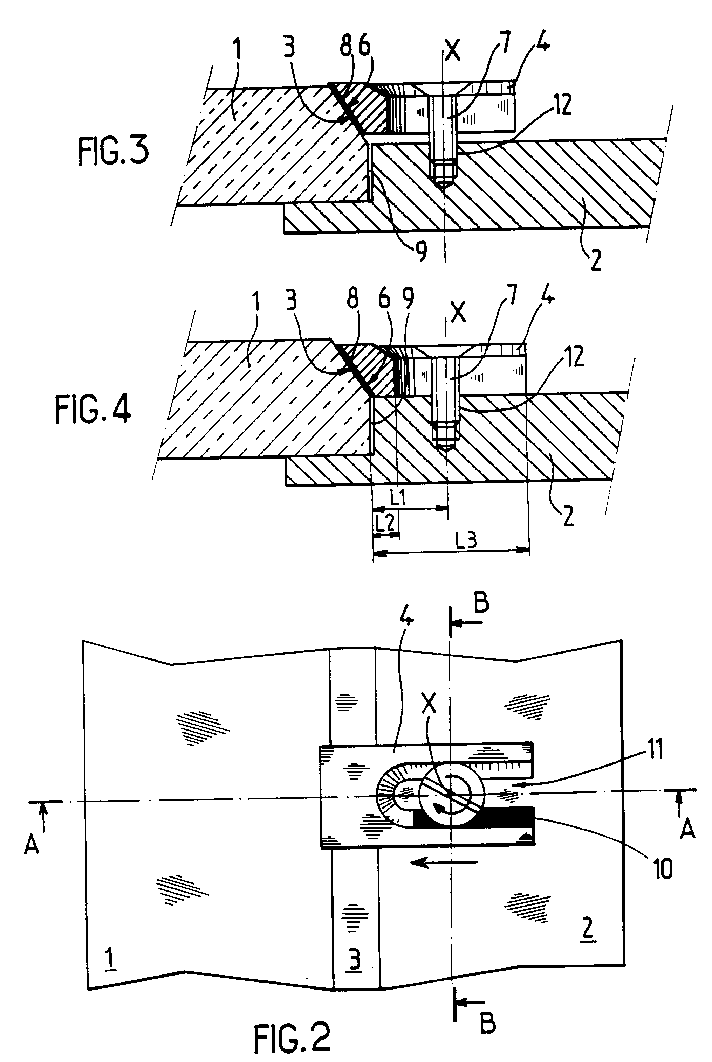

Tel que représenté sur les figures 2 à 4, la bride 4 comprend, dans sa partie postérieure, une fente 11 suivant l'axe X ouverte à la fois, sur les faces inférieures (en contact avec le support 2), supérieures et opposées à la face oblique 6. Cette fente 11 forme un passage de forme oblongue que traverse une vis de fixation 7 suivant l'axe X pour venir se visser dans un perçage taraudé 12 ménagé dans le support 2. De cette manière, en présence de la vis 7 en partie introduite dans le perçage 12, la fente 11 confère à la bride 4 une mobilité à la fois suivant l'axe X et perpendiculairement à cet axe et au chanfrein 3 de la plaque de verre 1.

Pour que la bride 4 puisse être fixée en appui contre la plaque de verre 1, il est nécessaire que le perçage 12 soit situé à une distance L1 de la plaque de verre 1 comprise entre la distance L2, entre la plaque de verre 1 et le début de la fente 11 (au demi-diamètre de la vis 7 près), et la distance L3 entre la plaque de verre 1 et la face opposée à la face oblique 6. Afin d'obtenir une bonne fixation de la bride, cette distance L1 doit être de préférence le plus proche possible de la distance L2.

La bride 4 et la vis sont, tout d'abord, mises en place : la face inclinée 6 de la bride 4 est appliquée sur chanfrein 3, sans que nécessairement la face inférieure de la bride 4 soit en contact avec le support 2, tandis que l'extrémité de la vis 7 traverse la fente 11, et pénètre dans le perçage 12 (figure 3). Grâce à la présence d'une fente et non d'un perçage, la bride 4 et la vis 7 peuvent être mis en place indifféremment l'un avant l'autre.

Lors du serrage de la vis 7, la bride 4 se rapproche du support 2, jusqu'à venir en contact avec celui-ci (figure 4). Au cours de ce mouvement, grâce à la mobilité de la bride 4, la face inclinée 6 vient glisser sur le chanfrein 3 de la plaque de verre 1, tandis que la bride 4 se déplace perpendiculairement à l'axe X en s'éloignant de la plaque de verre 1.
On obtient ainsi un autoajustement de la bride 4 vis à vis de la bordure de la plaque de verre 1.

Tel que représenté sur la figure 4, l'épaisseur de la bride 4 est inférieure à la hauteur du chanfrein 3. L'épaisseur de la bride 4 pourrait être différente sans que les caractéristiques de la fixation de la plaque de verre 1 soient affectées.
En outre, il s'avère que, même si les inclinaisons respectives de la face inclinée de la bride 4 et de la plaque de verre 1 ne sont pas rigoureusement identiques, la plaque de verre est quand même maintenue sans jeu et sans contrainte.
La fabrication des brides et de la plaque de verre ne nécessite donc pas un usinage très précis, et donc, de coût élevé.

Les bords supérieurs de la fente 11 sont évasés de manière à coopérer avec la tête conique d'une vis de fixation 7 dont l'autre extrémité peut s'engager dans un perçage ménagé dans le support 2. Une fois serrée, la tête de la vis 7 est donc complètement intégrée au volume de la bride 4.

Pour permettre à la plaque de verre de se dilater sans se briser, tout en étant maintenue sans jeu, un joint de dilatation 8 en matière élastique recouvre la face inclinée 6 de la bride 4 (figures 3 et 4). D'autre part, un espace libre 9 permettant à la plaque 1 de se dilater doit être prévu entre le support 2 et la partie verticale de la tranche de la plaque de verre 1.

Dans l'exemple représenté sur les figures 2 et 5, une cale 10 en matière à fort coefficient de frottement et à forte possibilité de compression (en mousse par exemple) recouvre un des bords inclinés de la fente 11 de manière à ce que, durant le serrage de la vis 7, la tête de la vis frotte sur cette cale 10. Grâce à ce frottement d'un seul côté de la fente, le couple exercé sur la tête de la vis pour lui imprimer un mouvement de rotation, est en partie transmis à la bride 4 en une force dirigée vers la plaque de verre 1.
Cette disposition garantit, qu'en fin de serrage de la vis 7, la bride 4 est parfaitement ajustée contre la face chanfreinée 3 de la plaque de verre 1.

En outre, après le montage de la bride 4, le frottement engendré par la cale 10 s'oppose avantageusement au dévissage intempestif de la vis 7, sous l'effet de vibrations par exemple.

Grâce au fort pouvoir de compression de la cale 10, la tête de la vis 7 l'écrase complètement pour s'appliquer avec une force similaire sur les deux bords de la fente 11. On évite ainsi que la bride 4 se déforme sous l'effet du serrage de la vis 7.

Un avantage important de ce dispositif de fixation provient du faible encombrement des brides, ces dernières étant d'une hauteur similaire, voire inférieure, à l'épaisseur de la plaque de verre qui émerge de la feuillure du support 2. L'utilisation d'une vis à tête conique qui s'intègre complètement dans le volume de la bride contribue à diminuer davantage l'encombrement des brides.

## Revendications

1. Dispositif de fixation sans jeu d'une plaque de verre (1) sur un support solide (2), au moyen d'au moins une cale (4) présentant un passage traversant (11) suivant un axe (X), de section oblongue dans un plan perpendiculaire audit axe (X), et dans lequel peut passer librement une vis de fixation destinée à être vissée dans un perçage taraudé du support (2),
caractérisé en ce que la cale (4) possède une face oblique (6) par rapport audit axe (X) apte à venir glisser et s'autoajuster contre une bordure de la plaque de verre (1) lors du vissage de la vis (7).

2. Dispositif selon la revendication 1,
caractérisé en ce la portion de la bordure (3) de la plaque de verre (1), sur laquelle vient porter la cale (4), présente un chanfrein d'inclinaison similaire à celle de ladite face oblique (6).

3. Dispositif selon la revendication 1,
caractérisé en ce la portion de la bordure (3) de la plaque de verre (1), sur laquelle vient porter la cale (4), présente un profil arrondi.

4. Dispositif selon l'une des revendications précédentes,
caractérisé en ce que la face oblique (6) de la cale (4) est recouverte d'un joint de dilatation (8).

5. Dispositif selon l'une des revendications précédentes,
caractérisé en ce que ledit passage (11) présente une section en U suivant un plan perpendiculaire audit axe (X) ouverte sur la face opposée à la face oblique (6).

6. Dispositif selon l'une des revendications précédentes,
caractérisé en ce que la cale (4) comprend des moyens (10) pour la maintenir contre la bordure (3) de la plaque de verre (1) au cours du vissage de la vis (7).

7. Dispositif selon la revendication 6,
caractérisé en ce que les moyens (10) consistent en une matière possédant un fort coefficient de frottement recouvrant l'un des deux bords du passage (11) susceptibles de venir en contact avec la tête de la vis (7).

8. Dispositif selon la revendication 7,
caractérisé en ce que les moyens (10) sont en matière à forte possibilité de compression.

9. Dispositif selon l'une des revendications 2 à 8,
caractérisé en ce que la tête de la vis (7) présente une forme conique qui coopère avec les bords du passage (11) de forme évasée, de manière à ce que, une fois serrée, la tête de la vis (7) soit complètement intégrée au volume de la cale (4).

## Patentansprüche

1. Vorrichtung zur Befestigung einer Glasplatte (1) ohne Spiel an einem festen Träger (2) mittels mindestens eines Klötzchens (4), das entlang einer Achse (X) einen Durchlaß (11) aufweist, der in einer zur Achse (X) senkrechten Ebene einen länglichen Querschnitt besitzt und den eine Befestigungsschraube frei durchqueren kann, die in eine Gewindebohrung des Trägers (2) eingeschraubt werden soll,
dadurch gekennzeichnet, daß das Klötzchen (4) eine in Bezug auf die Achse (X) schräge Fläche (6) aufweist, die beim Einschrauben der Schraube (7) gegen einen Rand der Glasplatte (1) gleiten und sich selbst anpassen kann.

2. Vorrichtung nach Anspruch 1, dadurch gekennzeichnet, daß der Abschnitt des Rands (3) der Glasplatte (1), auf dem das Klötzchen (4) aufliegt, eine Abschrägung aufweist, deren Neigung ähnlich der schrägen Fläche (6) ist.

3. Vorrichtung nach Anspruch 1, dadurch gekennzeichnet, daß der Abschnitt des Rands (3) der Glasplatte (1), auf dem das Klötzchen (4) aufliegt, ein abgerundetes Profil aufweist.

4. Vorrichtung nach einem der vorhergehenden Ansprüche, dadurch gekennzeichnet, daß die schräge Fläche (6) des Klötzchens (4) mit einer Dehnungsdichtung (8) bedeckt ist.

5. Vorrichtung nach einem der vorhergehenden Ansprüche, dadurch gekennzeichnet, daß der Durchlaß (11) entlang einer zur Achse (X) senkrechten Ebene einen U-förmigen Querschnitt aufweist, der zur der schrägen Fläche (6) entgegengesetzten Fläche hin offen ist.

6. Vorrichtung nach einem der vorhergehenden Ansprüche, dadurch gekennzeichnet, daß das Klötzchen (4) Mittel (10) aufweist, um es während des Einschraubens der Schraube (7) gegen den Rand (3) der Glasplatte (1) zu halten.

7. Vorrichtung nach Anspruch 6, dadurch gekennzeichnet, daß die Mittel (10) aus einem Material bestehen, das einen großen Reibungskoeffizienten aufweist und einen der beiden Ränder des Durchlasses (11) bedeckt, die mit dem Kopf der Schraube (7) in Kontakt gelangen können.

8. Vorrichtung nach Anspruch 7, dadurch gekennzeichnet, daß die Mittel (10) aus einem Material sind, das eine starke Kompressionsmöglichkeit aufweist.

9. Vorrichtung nach einem der Ansprüche 2 bis 8, dadurch gekennzeichnet, daß der Schraubenkopf (7) eine konische Form aufweist, die mit den sich ausweitenden Rändern des Durchlasses (11) zusammenwirkt, damit, wenn die Schraube eingeschraubt ist, der Schraubenkopf (7) vollständig in das Volumen des Klötzchens (4) integriert ist.

## Claims

1. A device for clearance-free mounting of a pane of glass (1) onto a rigid support (2) by means of at least one block (4) having a through passage (11) along an axis (X) having an oblong section in a plane perpendiculer to said axis (X) and in which can freely pass a fastening screw intended to be screwed into a threaded bore of said support (2), characterized in that said block (4) has a face (6) that is oblique in relation to said axis (X) and susceptible of sliding and self-adjusting against an edge of said pane of glass (1) during screwing of said screw (7).

2. The device as claimed in claim 1, characterized in that the portion of the edge (3) of the pane of glass (1) against which the block (4) comes to fit, has an inclination bevel similar to that of said oblique face (6).

3. The device as claimed in claim 1, characterized in that the portion of the edge (3) of the pane of glass (1) against which the block (4) comes to fit, has a rounded profile.

4. The device as claimed in one of the preceding claims, characterized in that the oblique face (6) of the block (4) is covered by an expansion seal (8).

5. The device as claimed in one of the preceding claims, characterized in that said passage (11) has a U-shaped section along a plane perpendicular to said axis (X) open towards the side opposite the oblique face (6).

6. The device as claimed in one of the preceding claims, characterized in that the block (4) comprises a means (10) for maintaining it against the edge (3) of the pane of glass (1) during screwing of the screw (7).

7. The device as claimed in claim 6, characterized in that the means (10) consists of a material with a high coefficient of friction covering one of the edges of the passage (11) susceptible of coming into contact with the head of the screw (7).

8. The device as claimed in claim 7, characterized in that the means (10) is in a material with high compressibility.

9. The device a claimed in one of claims 2 to 8, characterized in that the head of the screw (7) is in the shape of a cone which cooperates with the flared-shaped edges of the passage (11) so that, once tightened, said head of said screw (7) is completely integrated into the volume of the clamp (4).
